# DEMANDE DE BREVET EUROPEEN

(11) **EP 1 925 595 A1**
(43) Date de publication de la demande: **28.05.2008**
(21) Numéro de dépôt: 07121259.1
(22) Date de dépôt: 22.11.2007
(51) Int. Cl.: C02F 1/28, C02F 1/62

(54) **Procédé de traitement des eaux contenant des métaux indésirables**

(30) Priorité: 27.11.2006 BE 200600581
(71) Demandeur: S.A.Spadel N.V. Société de Services, de Participations, De Derection et d'Elaboration, 1030 Bruxelles (BE)
(72) Inventeur: Bas, Jean-Pierre, 1030 Bruxelles (BE)
(74) Mandataire: Leherte, Georges M.L.M.

(57) **Abrégé**

L'invention concerne un procédé de traitement des eaux en vue d'en éliminer des métaux indésirables en faisant transiter lesdites eaux sur un lit de matériau filtrant dont une partie au moins comprend une couche active d'oxydes de manganèse, dans lequel procédé un matériau solide, comprenant des composés de manganèse partiellement solubles dans l'eau traitée, est disposé en amont du lit de matériau filtrant, induisant un re-dépôt d'une couche d'oxydes actifs plus en aval dans le filtre.

## Description

La présente invention concerne un procédé de traitement des eaux qui permet d'enlever des concentrations d'éléments instables (fer et manganèse) ou indésirables voire toxiques (arsenic, et autres métaux traces) dans les eaux destinées à la consommation humaine. Le procédé peut s'appliquer à des eaux industrielles pour en retirer des métaux lourds avant rejet dans le milieu extérieur.

Un procédé physico-chimique traditionnel de démanganisation / déferrisation (plus généralement d'élimination des métaux lourds) des eaux consiste à oxyder chimiquement ces métaux à l'aide de permanganate de potassium, de chlore ou d'ozone manganèse, puis à filtrer les eaux sur un matériau granulaire (tel que le sable). Ce matériau s'enrobe de précipités d'oxyde de manganèse (essentiellement du bioxyde) pour former ce qu'on appelle un "green sand". Un tel "green sand" peut également être préparé en déposant préalablement un film de bioxyde de manganèse hydraté sur la surface d'un matériau granulaire.

Un exemple de mise en oeuvre de ce principe est décrit dans le document RU 2275335 concerne une application de ce principe.

Il est également fait référence à ce principe dans les documents WO 02/38511 et WO 03/095372. Cependant, ce document se rapporte plus particulièrement à un procédé de traitement des eaux permettant l'élimination des métaux indésirables sans ajout d'oxydant puissant, avec un matériau filtrant de préparation simplifiée. La particularité essentielle du procédé selon les documents WO 02838511 et WO 03/095372 est de faire transiter les eaux traitées sur un lit filtrant comprenant des grains de bioxyde de manganèse ayant une dureté supérieure à 6 sur l'échelle de Mohs. Ce procédé n'engendre pas ou très peu de perte de matériau filtrant.

Il est fait référence à ce même principe de "green sand" ("manganese sand") dans les documents EP 1 095 911 et JP 10-137772. Cependant, ces documents se rapportent plus particulièrement à un procédé de traitement des eaux permettant l'élimination du fer ou du manganèse, avec un matériau filtrant dont la particularité est d'être mis en oeuvre dans un lit fluidisé avec un contrôle serré du pH de réaction.

L'objectif de la présente invention est de procurer un procédé alternatif pour le traitement des eaux, particulièrement respectueux de la qualité des eaux obtenues, et simple et fiable quant à sa mise en oeuvre industrielle.

A cet effet l'invention procure un procédé de traitement des eaux, en vue d'en éliminer des métaux indésirables en faisant transiter les dites eaux sur un lit de matériau filtrant dont une partie au moins comprend une couche d'oxydes de manganèse, lequel procédé présente comme particularité qu'un matériau solide (un matériau sous forme de particules solides), comprenant des composés de manganèse partiellement solubles dans l'eau traitée, est disposé / introduit dans le flux d'eau traitée, en amont du lit de matériau filtrant, induisant un re-dépôt (une précipitation) d'une couche d'oxydes actifs plus en aval dans le lit de matériau filtrant.

L'expression composés de manganèse telle qu'utilisée dans le présent document doit être entendue dans un sens large, pouvant comprendre des oxydes, hydroxydes, oxyhydroxydes et/ou carbonates, purs ou mixtes, de manganèse et/ou de fer et de manganèse.

L'expression composés partiellement solubles dans l'eau traitée telle qu'utilisée dans le présent document doit s'entendre comme des minéraux susceptibles d'une dissolution par l'eau à traiter, libérant des ions de manganèse (et/ou) de fer.

L'expression oxydes actifs telle qu'utilisée dans le présent document doit s'entendre comme des oxydes néo-formés à structure hautement imparfaite impliquant / formant des "nanotubes" susceptibles de capter des cations et anions.

Selon des modes de réalisation préférés de l'invention le matériau comprenant des composés de manganèse partiellement solubles dans l'eau traitée, est disposé en surface du lit de matériau filtrant ou dans un compartiment situé en amont du lit de matériau filtrant, préalablement à et/ou pendant le passage des eaux à traiter sur le dit lit de matériau filtrant.

Il peut être aussi introduit sur le lit par un procédé d'alluvionnement consistant en une introduction d'une suspension de composés de manganèse partiellement solubles sous pression à l'entrée du lit de matériaux filtrant.

Il est évident que l'épaisseur du lit de matériau filtrant doit être suffisante pour permettre un re-dépôt (une précipitation) d'une couche d'oxydes actifs dans le lit de matériaux filtrant. Dans des conditions commerciales cette épaisseur se situe en général entre 60 cm et 1,5 m, pour des vitesses d'écoulement des eaux traitées entre 1 et 10 m/h.

Selon d'autres particularités préférées de l'invention, le potentiel d'oxydoréduction et/ou le pH des eaux à traiter sont ajustés préalablement au passage sur le/les composé(s) de manganèse et le lit de matériau filtrant.

En particulier le potentiel d'oxydoréduction est de préférence ajusté à une valeur entre 0,150 et 0,400 V, idéalement entre environ 0,200 et environ 0,300 V, et/ou
le pH est de préférence ajusté entre 5,5 et 7,5 idéalement entre 6,0 et 7,0.

L'aspect essentiel du procédé selon l'invention réside dans l'utilisation d'un minéral de traitement ("agent dopant"), sous forme solide, en amont du lit filtrant, comprenant des composés de manganèse sous forme relativement soluble, permettant de traiter (enlever) des cations et/ou anions indésirables de l'eau, même si celle-ci contient peu de Fer et/ou Manganèse, et ce, grâce à un effet dopant du lit filtrant.

Dans la capture des éléments indésirables (Fe, Mn, As, Ni,...) on peut constater une néoformation d'oxydes et d'hydroxydes de manganèse dans les conditions adéquates de pH et d'oxydation.

Ces précipités sont obtenus en deux étapes :
- adsorption rapide sur les défauts cristallins du matériau filtrant (sable) initial
- légère oxydation plus lente dans des conditions de potentiel rédox peu élevé.

Ils deviennent les nouveaux capteurs pour leurs propres cations (Mn) mais aussi, suivant les mêmes étapes, pour de nombreux cations et des anions.

L'eau, si elle est naturellement riche en manganèse, fournit la quantité nécessaire à la régénération des capteurs mal formés et le processus est donc autogénéré (formation continue d'oxydes) et autorégénéré (initialisation des sites capteurs).

Pour une présence naturelle insuffisante de Mn, on ajoute des minéraux solubles fournissant à l'eau le Mn nécessaire à la néoformation plus bas dans le filtre des minéraux oxydés capteurs. Le minéral ajouté agit alors comme dopant.

La plupart des médias dopants ont une minéralogie complexe d'oxydes, d'hydroxydes, d'oxyhydroxydes, ou encore de carbonates.

La dissolution du minéral dopant entraîne sa disparition progressive et donc l'arrêt de la néoformation des capteurs mal formés, s'il n'est pas remplacé.

Dans une première phase, l'adsorption se produit sur la surface hydratée d'un grain de matériau filtrant (quartz) en formant une croûte initiale d'hydroxydes de Mn mal formés.

Dès qu'un dépôt d'hydroxyde ou oxyde de Mn s'est produit, c'est ce minéral qui devient l'adsorbant et le processus s'accélère.

Notons que les traces de l'oxyhydroxyde de Mn déjà formé dans l'eau peuvent servir d'initiateur en se déposant sur les grains de sable du filtre.

La minéralogie des dépôts d'oxyhydroxydes est très complexe d'autant que l'évolution lente ultérieure par oxydation change la composition minéralogique du dépôt initial.

On peut observer une évolution des oxyhydroxydes de manganèse par exemple :

### turbo-birnésite (mal formée) → birnésite (mieux cristallisée) → pyrolusite

Le principe du procédé selon l'invention est donc d'ajouter -un composé de manganèse qui se dissout dans l'eau à traiter. La dissolution peut être naturelle à cause de l'agressivité originelle de l'eau ou induite par une acidification (au gaz carbonique). Une deuxième étape consiste à passer sur un filtre granulaire où le manganèse dissous se précipite sous forme de composés amorphes ou mal cristallisés capables par adsorption d'enlever les éléments non désirés. Le matériau "composé de manganèse" utilisé peut provenir :
- d'autres filtres de traitement d'eau qui se chargent naturellement en oxydes vu la concentration importante naturellement présente dans l'eau qu'ils traitent,
- de matériaux de carrière avec une forte composante manganifère
- de matériaux synthétiques.

Il s'agit d'oxydes/oxyhydroxydes/carbonates de Mn relativement bien cristallisés dont la structure cristalline présente peu de lacunes susceptibles d'adsorber mais de solubilité suffisante pour apporter à l'eau le complément de Mn. Cet apport donne alors lieu à la néoformation des oxyhydroxydes moins bien cristallisés plus bas dans le filtre.

Ce sont ces néoformés qui adsorbent les ions indésirables de l'eau (Fe, Mn, As, F,...)

L'exemple typique de ce fonctionnement est la dissolution progressive d'une Nsutite (γ-MnO₂) avec néoformation plus bas dans le filtre d'une birnésite mal cristallisée (dite turbo-birnésite) à haut pouvoir d'adsorption.

Des matériaux particulièrement intéressants pour la mise en oeuvre du procédé selon l'invention sont, par exemple, des oxydes de manganèse de type oxyhydroxydes de Mn, des oxydes de manganèse de type y-MnO₂ , des oxydes de manganèse de type Nsutite, et des oxydes de manganèse tels qu'obtenus à partir d'une électrolyse d'un sel de manganèse (comme par exemple le dioxyde de manganèse de type CIR 189 commercialisé par la société ERACHEM, obtenu par électrolyse d'un sulfate de manganèse). Des carbonates manganifères conviennent également pour des applications où la composition de l'eau peut être changée.

Le matériau utilisé est sous forme granulaire éventuellement en mélange avec du sable de silice ou un substrat correcteur de pH (carbonate de calcium et ou de magnésium)

Le matériau utilisé se dissout dans une première étape pour précipiter dans une deuxième sous forme de composés spécifiques en relation avec la composition de l'eau traitée.

Le matériau, vu qu'il se dissout, doit être régulièrement renouvelé par recharge ou alluvionnement continu pour poursuivre son action.

Le filtre où se produisent la précipitation et la rétention des éléments indésirables, doit être contre-lavé chaque fois que cela s'avère nécessaire, pour enlever les excédents de matériaux

La deuxième étape de co-précipitation peut s'accompagner d'ajustement des conditions de réaction soit d'oxygénation (augmentation du potentiel rédox) soit de réduction d'acidité (dégazage, matériaux de filtration produisant de l'alcalinité).

Le procédé convient particulièrement bien aux eaux acides avec une faible réserve alcaline.

Dans le cas des eaux de boissons, le procédé est particulièrement approprié pour le traitement des eaux contenant peu de fer ou de manganèse, mais avec des concentrations supérieures aux normes, ce qui demande une intervention. Les quantités sont insuffisantes pour obtenir, sans le dopant, la formation d'oxydes instables nécessaires à la rétention des espèces gênantes. Le procédé est alors utilisé pour satisfaire aux normes de potabilité.

Dans le cas des eaux industrielles, il peut n'y avoir que des métaux toxiques à enlever. Le procédé peut être utilisé pour satisfaire à des normes de rejet.

Le recours à la seule introduction d'oxydes de manganèse comme capteur/initiant peut s'avérer insuffisant dans la mesure où l'eau à traiter se trouve en dehors du domaine de stabilité des oxydes capteurs.

Il faut alors combiner plusieurs techniques. Dans le cas des eaux de boissons, on peut prévoir un dégazage pour réduire la concentration en gaz carbonique libre et l'utilisation d'oxygène pour remonter le potentiel d'oxydoréduction. Dans le cas des eaux industrielles, on peut prévoir des ajustements chimiques du pH une fois que la dissolution du dopant a été obtenue. On assure ainsi, que dans la phase de précipitation, on reste dans le domaine de stabilité des oxydes à reformer. Il faut en général réduire les vitesses de filtration pour bénéficier au maximum des techniques d'aide à la formation des oxydes.

D'autres particularités de l'invention apparaitront à la lecture des exemples qui suivent, donnés à titre purement illustratifs et non limitatifs.

### Exemple 1 : traitement d'une eau de boisson

La séquence d'opérations peut (dans le cas le plus complexe) être composée des étapes suivantes:
- ajustement du pH par dégazage
- aération/oxygénation
- filtration sur matériaux granulaire mélangé avec le matériaux dopant

### Ajustement du pH par dégazage

En général, l'acidité d'une eau de boisson est liée à sa concentration en gaz carbonique libre. Le passage de l'eau dans une colonne de stripage à l'air ou dans une colonne sous vide, permettra d'enlever une grande partie de ce gaz et de relever le pH de 0,5 unité. Le ratio air/eau dans le cas du stripage ou l'intensité du vide dans le deuxième cas doit faire l'objet d'essai car il faut conserver une agressivité résiduelle pour obtenir la dissolution du dopant.

### Aération/oxygénation

Cette opération se justifie si l'étape précédente est absente ou réalisée dans une colonne de vide qui retire aussi l'oxygène . Dans les cas difficiles, l'air peut être remplacé par de l'oxygène pur notamment dans les deux ou trois premiers mois du démarrage d'une nouvelle installation. Le but est d'obtenir la saturation en aération et des concentrations jusque 30 mg/l dans le cas de l'oxygénation. Le gaz oxydant est introduit à l'aide de système Venturi éventuellement sur une boucle de circulation alimentée à partir de la sortie de l'étape suivante (filtre) et qui renvoie l'eau oxygénée en tête de cette dernière.

### Filtration sur matériaux granulaire

Le matériau granulaire de base peut être du sable de silice sur lequel un volume d'oxydes de 10 à 20 % est superposé. Les vitesses de filtration sont lentes de 3 à 5 m/h. L'épaisseur du lit de sable est d' au moins 60 cm avec une granulométrie de 0,4 à 0,8 mm. Le rétro-lavage nécessaire pour enlever les résidus de dopant et d'excédent de précipitation se fait à 20m/h. L'ajout régulier de dopant se fait par ouverture d'un trou d'homme disposé en partie supérieure du filtre.

### Exemple 2 : traitement d'une eau industrielle

La séquence d'opérations peut (dans le cas le plus complexe) être composée des étapes suivantes :
- ajustement du pH
- dissolution du dopant
- réajustement du pH
- aération/oxygénation
- filtration sur matériaux granulaire

### Ajustement du pH

Ici le but est plutôt d'acidifier temporairement l'eau si son agressivité est insuffisante. On utilise le gaz carbonique car il pourra être plus facilement enlevé une fois la dissolution du dopant obtenue. Il faut atteindre des concentrations de l'ordre de 100 mg/I. Il peut être injecté par venturi avec boucle de recirculation comme indiqué ci-dessus pour l'oxygénation.

### Dissolution du dopant

L'eau au pH ajusté passe dans un réservoir de conception identique à un filtre rempli du matériaux dopant éventuellement mélangé à du sable. Le rapport sable/dopant est fonction de la concentration à obtenir en manganèse dissous. L'ajout régulier de dopant se fait par ouverture d'un trou d'homme disposé en partie supérieure du filtre.

### Ajustement du pH

Il s'agit de remettre le système dans les conditions de précipitation des oxydes. Ceci peut être obtenu par dégazage ou stripage mais comme nous sommes dans le domaine industriel, des réactifs chimiques peuvent être aussi employés.

### Aération/oxygénation

Cette opération est identique à celle décrite pour les eaux de boisson.

### Filtration sur matériaux granulaire

Le matériau granulaire de base peut être du sable mélangé à un oxyde de manganèse qui agira comme catalyseur de la co-précipitation. Cet oxyde facilite le démarrage de la réaction mais après quelques mois, le procédé doit s'entretenir seul grâce à la dissolution obtenue en deuxième étape. Les vitesses de filtration sont lentes de 3 à 5 m/h. L'épaisseur du lit de sable est d'au moins 60 cm avec une granulométrie de 0,4 à 0,8 mm. Le rétro-lavage nécessaire pour enlever les résidus de dopant et d'excédent de précipitation se fait à 20m/h

## Revendications

1. Procédé de traitement des eaux en vue d'en éliminer des métaux indésirables en faisant transiter lesdites eaux sur un lit de matériau filtrant dont une partie au moins comprend une couche d'oxydes de manganèse, **caractérisé en ce qu'**un matériau solide, comprenant des composés de manganèse partiellement solubles dans l'eau traitée, est disposé dans le flux d'eau traitée, en amont du lit de matériau filtrant, induisant un re-dépôt d'une couche d'oxydes actifs plus en aval dans le lit de matériau filtrant.

2. Procédé selon la revendication 1, **caractérisé en ce que** le matériau comprenant des composés de manganèse est disposé en surface du lit de matériau filtrant ou dans un compartiment situé en amont du lit de matériau filtrant, préalablement à et/ou pendant le passage des eaux traitées sur ledit lit de matériau filtrant.

3. Procédé selon l'une ou l'autre des revendications 1 et 2, **caractérisé en ce que** le potentiel d'oxydoréduction et/ou le pH des eaux traitées est/sont ajusté(s) préalablement au passage sur le/les oxyde(s) de manganèse et le lit de matériau filtrant.

4. Procédé selon la revendication 3, **caractérisé en ce que** le potentiel d'oxydoréduction est ajusté à une valeur entre 0,150 et 0,400 V, de préférence entre environ 0,200 et environ 0,300 V.

5. Procédé selon l'une ou l'autre des revendications 3 et 4, **caractérisé en ce que** le pH est ajusté entre 5,5 et 7,5, de préférence entre 6,0 et 7,0.

6. Procédé selon l'une ou l'autre des revendications précédentes, **caractérisé en ce que** le matériau comprenant des composés manganèse est choisi parmi les matériaux comprenant des carbonates et/ou oxydes de manganèse (de type oxyhydroxydes de Mn).

7. Procédé selon la revendication 6, **caractérisé en ce que** le matériau comprenant des composés de manganèse est choisi parmi les matériaux comprenant des oxydes de manganèse de type γ-MnO₂, des oxydes de manganèse de type Nsutite et/ou des oxydes de manganèse obtenus par électrolyse de sels de manganèse.
